# EUROPEAN PATENT SPECIFICATION

(11) **EP 3 762 183 B1**
(45) Date of publication and mention of the grant of the patent: **11.11.2026**
(21) Application number: 18904927.3
(22) Date of filing: 08.02.2018
(51) Int. Cl.: B25J 9/16, G05B 19/14, G05B 19/418, G05B 19/408, B25J 9/00

(54) **METHOD AND APPARATUS FOR ADJUSTING ROBOT MOTION PATH**
VERFAHREN UND VORRICHTUNG ZUM EINSTELLEN DER BEWEGUNGSBAHN EINES ROBOTERS
PROCÉDÉ ET APPAREIL POUR RÉGLER UNE TRAJECTOIRE DE MOUVEMENT DE ROBOT

(43) Date of publication of application: 13.01.2021
(73) Proprietor: ABB Robotics Schweiz AG, 8050 Zürich (CH)
(72) Inventor: ZHAO, Fangfang, Shanghai 201317 (CN); MAO, Lei, Shanghai 201318 (CN); CHENG, Shaojie, Shanghai 201601 (CN)
(74) Representative: Zimmermann & Partner Patentanwälte mbB
(86) International application number: PCT/CN2018/075743
(87) International publication number: WO 2019/153169

(56) References cited:
- CN-A- 103 163 837
- CN-A- 103 970 071
- CN-A- 104 057 290
- JP-A- 2006 130 522
- JP-A- H01 246 086
- US-A1- 2011 153 080
- US-B1- 6 740 534
- POWELL MARK A: "AGILE EDGE FINISHING SYSTEM", 18 September 1995 (1995-09-18), Cincinnati, Ohio, US, pages 621 - 638, XP055809680, Retrieved from the Internet <URL:https://p2infohouse.org/ref/25/24218.pdf>
- AURICH J C ET AL: "Burrs-Analysis, control and removal", CIRP ANNALS, ELSEVIER BV, NL, CH, FR, vol. 58, no. 2, 1 January 2009 (2009-01-01), pages 519 - 542, XP026770025, ISSN: 0007-8506, [retrieved on 20091014], DOI: 10.1016/J.CIRP.2009.09.004
- MARK ALBERT: "Adaptive Machining Makes a Robot More Productive", MODERN MACHINE SHOP, 8 January 2015 (2015-01-08), pages 1 - 5, XP093102356, Retrieved from the Internet <URL:https://www.mmsonline.com/articles/adaptive-machining-makes-a-robot-more-productive> [retrieved on 20231116]

## Description

### TECHNICAL FIELD

Example embodiments of the present disclosure generally relate to robot path planning, and more specifically, to methods, apparatuses, systems and computer readable media for adjusting a robot motion path based on process data in a manufacturing procedure.

### BACKGROUND

With the development of computer and automatic control, robots have been widely used to manufacture various types of workpieces. Typically, a rough manufacturing procedure (such as an injection molding process, a mechanical process, and the like) may be performed on a rough workpiece to obtain a rough product. Then, robots may be used to handle the rough product in a precise manner to obtain a final product. However, there may be some differences between the real shape and the ideal shape of the rough product after the rough manufacturing procedure. At this point, if the rough product with the real shape is processed according to a robot motion path that is predefined based on the ideal shape, it may be possible that the final product cannot reach the expected shape and thus become a defective product.

There have been proposed several solutions for measuring the real shape of the rough product and adjusting the robot motion path based on the difference between the real shape and the ideal shape of the rough product. However, these solutions heavily rely on manual operations and cannot consider impacts of various steps performed during the rough manufacturing procedure. Therefore, how to adjust the robot motion path in a more effective and convenience manner becomes a focus.
US 6 740 534 B1 discloses a process flow routing mechanism in response to validating faults or errors detected during processing of semiconductor wafers.
Powell M. A: "Agile Edge Finishing System", Finishing '95 Conference and Exposition, 1995-09-18, pages 621-638, discloses a robotic edge finishing concept for metal parts production including burr size and type prediction, process planning, and path planning.

### SUMMARY

Example embodiments of the present disclosure provide solutions for adjusting a robot motion path.

In a first aspect, example embodiments of the present disclosure provide a method for adjusting a robot motion path. The method may comprise: performing a first processing procedure on a first workpiece to obtain a first product; obtaining first process data that describes an attribute of the first processing procedure for obtaining the first product from the first workpiece; and adjusting, based on the obtained first process data, a robot motion path of a second processing procedure that is to be performed on the first product. Usually, the process data (such as the pressure, the speed and so on) during the first processing procedure may control the shape of the first product that is generated from the first processing procedure. With these embodiments, the process data may be used to compensate an error, between the real shape and the ideal shape of the first product, caused by the process data. Especially, based on the process data, the robot motion path that is to be used in a subsequent second processing procedure may be adjusted to correct the error.

In some embodiments, the adjusting a robot motion path of a second processing procedure may comprise: generating a predicted model for the first product based on the obtained first process data; and adjusting the robot motion path based on a model difference between the predicted model and an ideal model of the first product. With these embodiments, a predicted model which has a predicted shape of the first product may be generated. Then, by comparing the predicted shape with an ideal shape indicated by the ideal model, the error caused by the process data in the first processing procedure may be determined. Then the robot motion path may be easily adjusted based on the result of the comparison.

In some embodiments, the generating a predicted model for the first product may comprise: obtaining a threshold process data associated with the first processing procedure; and generating the predicted model for the first product based on a difference between the obtained first process data and the threshold process data. In these embodiments, the threshold process data may indicate a boundary between the normal and the abnormal process data, wand may be determined based on historical experience. With these embodiments, whether the first processing procedure has introduced the error into the first product may be determined simply by a comparison between the process data and the threshold process data. Further, the predicted model may be determined accordingly.

In some embodiments, the adjusting the robot motion path based on a model difference may comprise: obtaining a predetermined motion path for the robot; and adjusting the predetermined motion path based on the model difference such that an error caused by the first process data on the first product in the first processing procedure is compensated in the second processing procedure. Here, the predetermined motion path is an ideal robot motion path for shaping the ideal first product into an ideal final product. As the model difference indicates a deviation between the real first product and the ideal first product, the predetermined motion path cannot be directly used to the first product, and the model difference may provide a convenient manner for adjusting the predetermined motion path.

In some embodiments, the adjusting the robot motion path may further comprise: obtaining ideal dimensions of a shape of the first product; obtaining measurement dimensions of the shape of the first product; and adjusting the robot motion path based on a dimension difference between the measurement dimensions and the ideal dimensions. Further than the process data, these embodiments also consider the real shape of the first product. By comparing the real shape and the ideal shape of the first product, a difference in the shapes may be determined for further adjusting the robot motion path. With these embodiments, the real shape of the first product may be considered as another aspect for adjusting the robot motion path, and thus the robot motion path may be adjusted in a more precious manner.

In some embodiments, the method may further comprise: in response to the dimension difference satisfying a predetermined condition, adjusting a first processing procedure that is to be performed on a second workpiece based on the difference. Further than providing adjustment to the robot motion path for the subsequent second processing procedure, the dimension difference may also provide a feedback to the previous first processing procedure. Then, the feedback may be used during performing the first processing procedure on other to-be-processed workpieces. With these embodiments, the first processing procedure may be gradually adjusted to match an ideal first processing procedure which may shape the to-be-procedure workpieces into the ideal first products.

In some embodiments, the first processing procedure may comprise a plurality of steps. At this point, the performing a first processing procedure may comprise performing the plurality of steps on the first workpiece to obtain the first product, and the first process data may describe attributes of the plurality of steps. With these embodiments, with respect to each of the plurality of steps comprised in the first processing procedure, individual process data relating to a corresponding attribute of the each step may be obtained for the first processing procedure. Therefore, the first processing procedure may be monitored and controlled in a fined granularity, which may further increase the accuracy for the adjusting.

In some embodiments, the method may further comprise performing the second processing procedure on the first product based on the adjusted robot motion path. Once the robot motion path is adjusted, the first product may be subjected to the second processing which is defined by the adjusted robot motion path. With these embodiments, the adjusted robot motion path may provide a motion path which is customized to the first product and correct the error in the first product.

In some embodiments, the method further comprises: obtaining a threshold process data associated with the first processing procedure; and in response to a difference between the first process data and the threshold process data satisfying a predetermined condition, adjusting a first processing procedure that is to be performed on a second workpiece based on the difference. Further than providing adjustment to the robot motion path for the subsequent second processing procedure, these embodiments may also provide a feedback to the previous first processing procedure. Then, the feedback may be used during performing the first processing procedure on other to-be-processed workpieces. With these embodiments, the first processing procedure may be gradually adjusted to match an ideal first processing procedure which may shape the to-be-procedure workpieces into the ideal first products.

In a second aspect, example embodiments of the present disclosure provide an apparatus for adjusting a robot motion path. The apparatus may comprise: a performing unit configured to perform a first processing procedure on a first workpiece to obtain a first product; an obtaining unit configured to obtain first process data that describes an attribute of the first processing procedure for obtaining the first product from the first workpiece; and an adjusting unit configured to adjust, based on the obtained first process data, a robot motion path of a second processing procedure that is to be performed on the first product by a robot.

In some embodiments, the adjusting unit may comprise: a generating unit configured to generate a predicted model for the first product based on the obtained first process data; and a path adjusting unit configured to adjust the robot motion path based on a model difference between the predicted model and an ideal model of the first product.

In some embodiments, the generating unit may comprise: a threshold obtaining unit configured to obtain a threshold process data associated with the first processing procedure; and a model generating unit configured to generate the predicted model for the first product based on a difference between the obtained first process data and the threshold process data.

In some embodiments, the adjusting unit may comprise: a path obtaining unit configured to obtain a predetermined motion path for the robot; and a path adjusting unit configured to adjust the predetermined motion path based on the model difference such that an error caused by the first process data on the first product in the first processing procedure is compensated in the second processing procedure.

In some embodiments, the path adjusting unit may comprise: an ideal dimension obtaining unit configured to obtain ideal dimensions of a shape of the first product; a measurement obtaining unit configured to obtain measurement dimensions of the shape of the first product; and the adjusting unit is further configured to adjust the robot motion path based on a dimension difference between the measurement dimensions and the ideal dimensions.

In some embodiments, the apparatus may further comprises a feedback unit configured to adjust a first processing procedure that is to be performed on a second workpiece based on the difference in response to the dimension difference satisfying a predetermined condition.

In some embodiments, the first processing procedure may comprise a plurality of steps; and the performing unit may be further configured to perform the plurality of steps on the first workpiece to obtain the first product. The first process data may describe attributes of the plurality of steps.

In some embodiments, the apparatus may further comprise: a second performing unit configured to perform the second processing procedure on the first product based on the adjusted robot motion path.

In some embodiments, the apparatus may further comprise: a threshold obtaining unit configured to obtain a threshold process data associated with the first processing procedure; and a feedback unit configured to, adjust a first processing procedure that is to be performed on a second workpiece based on the difference in response to a difference between the first process data and the threshold process data satisfying a predetermined condition.

In a third aspect, example embodiments of the present disclosure provide a system for adjusting a robot motion path. The system comprises: a computer processor coupled to a computer-readable memory unit, the memory unit comprising instructions that when executed by the computer processor implements the method for adjusting a robot motion path.

In a fourth aspect, example embodiments of the present disclosure provide a computer readable medium having instructions stored thereon, the instructions, when executed on at least one processor, cause the at least one processor to perform the method for adjusting a robot motion path.

### DESCRIPTION OF DRAWINGS

Drawings described herein are provided to further explain the present disclosure and constitute a part of the present disclosure. The example embodiments of the disclosure and the explanation thereof are used to explain the present disclosure, rather than to limit the present disclosure improperly.
FIG. 1 illustrates a schematic diagram for adjusting a robot motion path in accordance with one technical solution;
FIG. 2 illustrates a schematic diagram for adjusting a robot motion path based on process data in accordance with embodiments of the present disclosure;
FIG. 3 illustrates a schematic flowchart of a method for adjusting a robot motion path based on process data in accordance with embodiments of the present disclosure;
FIG. 4 illustrates a schematic diagram for determining an adaptive robot motion path in accordance with embodiments of the present disclosure;
FIG. 5 illustrates a schematic diagram for determining an adaptive robot motion path in accordance with embodiments of the present disclosure;
FIG. 6 illustrates a schematic diagram for preforming the second processing procedure based on the adaptive robot motion path in accordance with embodiments of the present disclosure;
FIG. 7 illustrates a schematic diagram for providing a feedback to the first processing procedure based on the first process data in accordance with embodiments of the present disclosure;
FIG. 8 illustrates a schematic diagram of an apparatus adjusting a robot motion path based on process data in accordance with embodiments of the present disclosure; and
FIG. 9 illustrates a schematic diagram of a system for adjusting a robot motion path based on process data in accordance with embodiments of the present disclosure.

Throughout the drawings, the same or similar reference symbols are used to indicate the same or similar elements.

### DETAILED DESCRIPTION OF EMBODIEMTNS

Principles of the present disclosure will now be described with reference to several example embodiments shown in the drawings. Though example embodiments of the present disclosure are illustrated in the drawings, it is to be understood that the embodiments are described only to facilitate those skilled in the art in better understanding and thereby achieving the present disclosure, rather than to limit the scope of the disclosure in any manner.

There have been proposed solutions for adjusting the robot motion path based on the difference between the real shape and the ideal shape of the rough product. However, these solutions depend on manual operations and cannot consider impacts of various steps performed during the rough manufacturing procedure. Therefore, how to adjust the robot motion path in a more effective and convenience manner becomes a focus. Even if the robot motion path may be adjusted, due to lack of feedback to the previous rough manufacturing procedure, the previous rough manufacturing procedure will continuously repeat its current operations and produce rough products not which fail to match the ideal rough product. Accordingly, it is also desired to provide a feedback to the previous rough processing procedure.

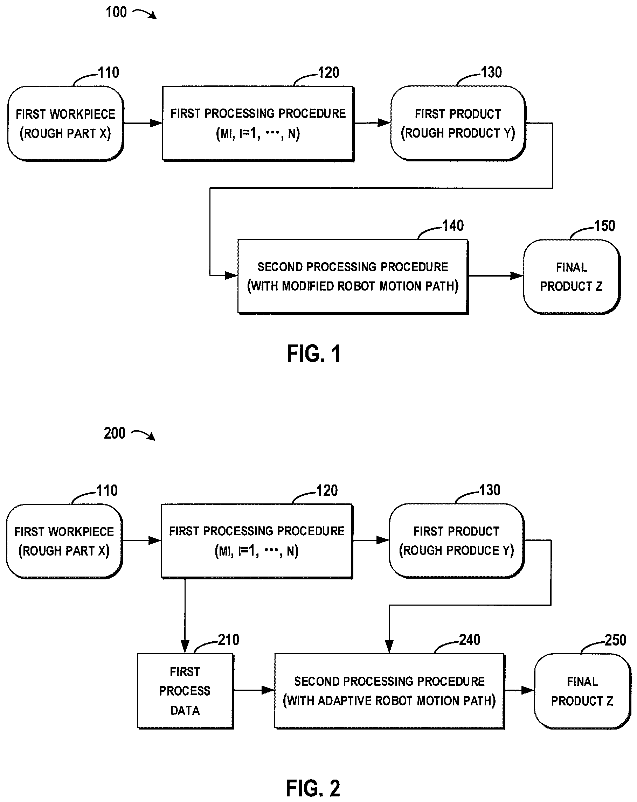

In order to at least partially solve the above and other potential problems, a new method for adjusting a robot motion path is disclosed according to embodiments of the present disclosure. For the sake of description, embodiments of the present disclosure will be described in an environment of a factory, where final products are generated from rough parts. Reference will be made to FIG. 1 to provide a general description of environment of the present disclosure.

FIG. 1 illustrates a schematic diagram 100 for adjusting a robot motion path in accordance with one technical solution. As illustrated in FIG. 1, a first workpiece 110 such as a rough part X is obtained for producing the final product 150. Here, the first workpiece 110 may be subjected to a first processing procedure 120, where the first processing procedure may include one or more steps such as M1, M2, ..., Mn. For example, the first processing procedure 120 may be the rough manufacturing procedure such as an injection molding process, or a mechanical process for shaping the first workpiece 110 into a first product 130 (such as a rough product Y). Then, the first product 130 may be subjected to a second processing procedure 140 with a modified robot motion path to obtain the final product 150 (such as Z). Here, the modified robot motion path is generated based on the prior solution which is based on a comparison between the real shape and ideal shape of the first product 130. However, the modified robot motion path is heavily depended on the manual work and thus results in high time and workload cost.

Different from the solution in FIG. 1, the present disclosure provides a method for an adaptive robot motion path adjustment. FIG. 2 illustrates a schematic diagram 200 for adjusting a robot motion path based on process data in accordance with embodiments of the present disclosure. The blocks 110, 120 and 130 indicate similar meanings as those in FIG. 1, and the difference between FIG. 2 and FIG. 1 lies in that: process data 210 which indicates an attribute of the first processing procedure 120 may be obtained. Further, the obtained process data 210 may be used in determining an adaptive robot motion path for the second processing procedure 240. Then, the adaptive robot motion path may be run by the robot during the second processing procedure 240 to get a final product 250.

Usually, the process data 210 (such as the temperature, pressure and so on) during the first processing procedure 120 may control the shape and quality of the first product 130 that is generated in the first processing procedure 120. Then, in a subsequent processing procedure for obtaining the final produce 250, the process data 210 may be used to compensate the error between the real shape and ideal shape of the first product 130 caused by the process data. Hereinafter, how to produce a plastic part of a mouse by an injection molding process and a subsequent robot polishing procedure will be described as an example for illustration. In this example, the first processing procedure 120 may be the injection molding process, and the second processing procedure 240 may be a robot polishing procedure based on the adaptive robot motion path.

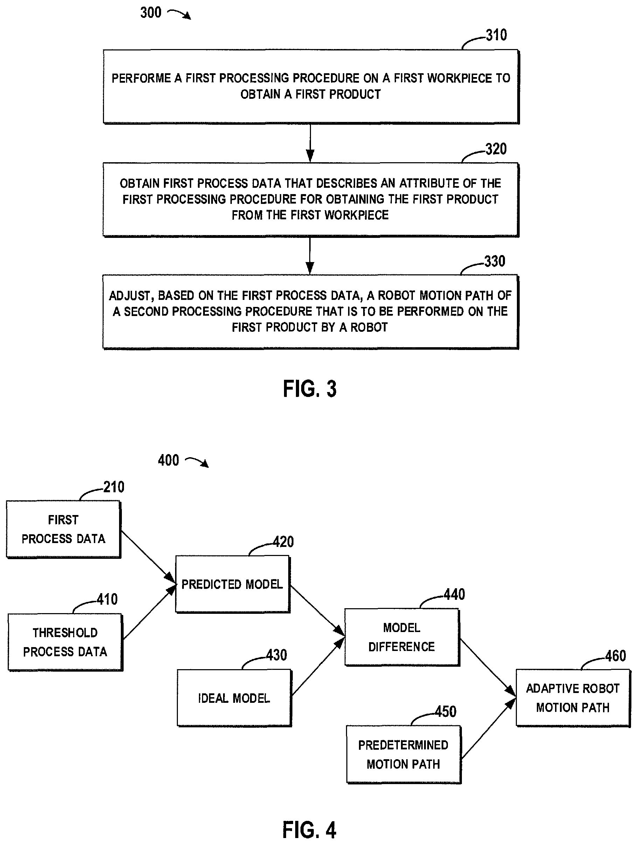

FIG. 3 illustrates a schematic flowchart of a method 300 for adjusting a robot motion path based on process data 210 in accordance with embodiments of the present disclosure. At 310 of FIG. 3, a first processing procedure 120 may be performed on the first workpiece 110 to obtain a first product 130. For the purpose of illustration, the following paragraphs will describe details of the present disclosure by taking one step in the first processing procedure 120 as an example. Those skilled in the art may determine the details for implementing other steps in the first processing procedure 120 in a similar manner. In the example of producing the plastic part of the mouse, the raw plastic material may be heated and then melt plastic liquid may be injected into the mold during the first processing procedure 120.

At 320, the first process data 210 that describes the attribute of the first processing procedure 120 for obtaining the first product 130 from the first workpiece 110 may be determined. In this embodiment, the attribute may be the pressure and sensors may be deployed to measure the pressure between the mold and the injected mouse part. For example, multiple sensors may be deployed inside the mold to measure pressures at different positions of the mouse part. At this point, the pressure data may be considered the first process data 210. It is to be understood that, the pressure is just an example of the first process data 210. In another processing procedure with another type, the first press data 210 may indicate another attribute. For example, in cutting a workpiece into a cube, the first process data 210 may be a speed of the machine.

At 330, a robot motion path of a second processing procedure 240 that is to be performed on the first product 130 may be determined based on the first process data 210. Usually, if the process data 210 indicates that the pressure is higher than usual, it may be determined that a target area around the sensor position in the first product 130 may be thicker than usual, and then the robot motion path of the robot may be adjusted to polish the target area harder than usual to remove the thicker portion. With these embodiments, the process data 210 may be used to compensate thicker portion caused by the high pressure. Especially, based on the process data 210, the robot motion path that is to be used in a subsequent polish procedure may be adjusted to correct the error.

Reference will be made to FIG. 4 to describe details about how to generate the adaptive robot motion path. FIG. 4 illustrates a schematic diagram 400 for determining an adaptive robot motion path 460 in accordance with embodiments of the present disclosure. In some embodiments, a predicted model 420 may be generated for the first product 130. Referring to FIG. 4, after the first process data 210 is obtained by the deployed sensor, a threshold process data 410 associated with the first processing procedure 120 may be obtained. Here, the threshold process data 410 may indicate a boundary between the normal and abnormal process data and may be determined based on historical experience. For example, if the historical experience indicates that the normal pressure at the mold is Presure0, then the value Presure0 may be used as the threshold process data 410.

Afterwards, the predicted model 420 may be generated for the first product 130 based on a difference between the first process data 210 and the threshold process data 410. Continuing the above example, if the first process data 210 indicates that the collected pressure is greater than the value Presure0, then it may be estimated that the predicated model 420 will be a little thicker than the ideal model 430 of the first product 130. Otherwise, if the first process data 210 indicates that the collected pressure is lower than the value Presure0, then it may be estimated that the predicated model 420 will be a little thinner than the ideal model 430 of the first product 130. With these embodiments, whether the first processing procedure 120 has introduced an error into the first product 130 may be determined simply by a comparison between the first process data 210 and the threshold process data 410. Further, the predicted model 420 may be determined conveniently.

In some embodiments, based on the extent of the difference between the first process data 210 and the threshold process data 410, the model difference 440 between the predicted model 420 and the ideal model 430 may be classified into various levels so as to indicate the error degree of the first product 130 in a quantized manner. With these embodiments, the error caused by the first process data 210 in the first processing procedure 120 may be determined. Then the robot motion path may be adjusted easily based on the error.

Still referring to FIG. 4, in order to obtain the adaptive the robot motion path, a predetermined motion path 450 for the robot may be obtained. Here, the predetermined motion path 450 is an ideal robot motion path for shaping the ideal first product into an ideal final product. If the first product 130 which has a different shape than the ideal shape is processed according to the predetermined motion path 450, clearly the final product will not match the ideal final product. For example, if the first product 130 is much thicker than the ideal one and the polishing procedure still removes a normal thickness of 0.25 mm from the surface of the first product 130, of course the thickness of the final product will be much thicker than the ideal one.

With these embodiments, as the model difference 440 indicates a deviation between the real first product and the ideal first product, the predetermined motion path may be effectively adjusted based on the model difference 440. At this point, the predetermined motion path 450 may be modified to reach the adaptive robot motion path 460 based on the model difference, such that the error caused by the first process data on the first product 130 in the first processing procedure 120 is compensated in the second processing procedure 240. Continuing the above example, the adaptive robot motion path may be set to another configuration which may remove 0.3 mm from the surface of the first product 130. With the adaptive robot motion path 460, the thicker portion in the first product 130 may be corrected to the ideal thickness by in the second processing procedure 240.

In some embodiments, when the model difference 440 between the predicted model 420 and the ideal model 430 is classified into various levels, the adaptive robot motion path 460 may also be adjusted according to the level. For example, the model difference 440 may be classified into {high, medium, low}, and the adaptive robot motion path 460 may also be classified into three levels {high, medium, low} to indicate that different thickness will be removed from the surface of the first product 130. Specifically, a high level may define that a thickness of 0.3 mm should be polished away, and a low level may define that a thickness of 0.26 mm should be polished away. With these embodiments, the robot motion path of the robot may be controlled in a more precious manner and thus ensure that the final product 250 may be similar as the ideal final product in the shape.

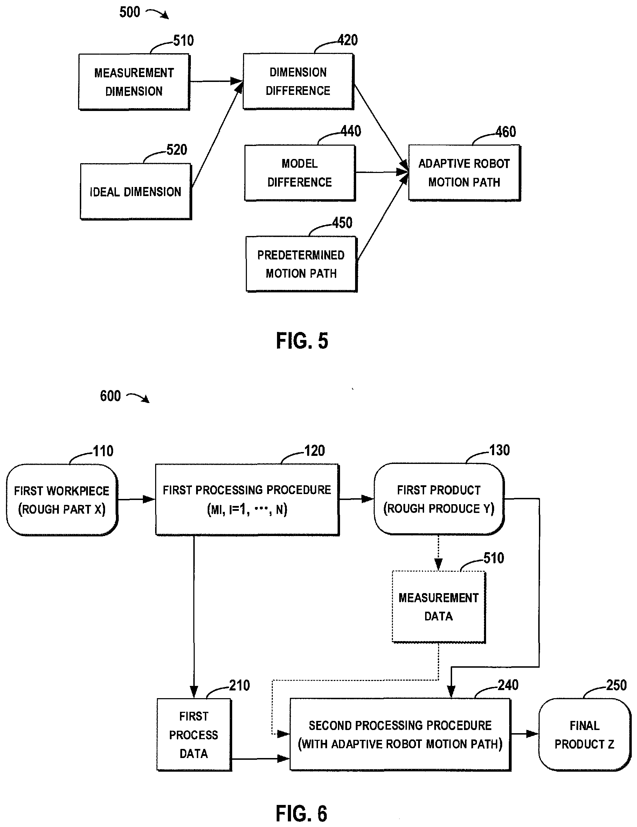

In some embodiments, the real shape of the first product 130 may be utilized in further adjusting the robot motion path. FIG. 5 illustrates a schematic diagram 500 for determining an adaptive robot motion path 460 in accordance with embodiments of the present disclosure. As illustrated in FIG. 5, measurement dimensions 510 of the shape of the first product 130 may be obtained. Here, the measurement dimensions 510 may be collected by for example a camera or another tool. Further, ideal dimensions 520 of the shape of the first product 130 may be obtained. Here, the ideal dimensions 520 may be collected from for example a three dimension model of the ideal first product 130. Next, the adaptive robot motion path 460 may be obtained based on the predefined motion path 450 and a dimension difference between the measurement dimensions 510 and the ideal dimensions 520.

With these embodiments, a difference in the shape may be determined for further adjusting the robot motion path by comparing the real shape and the ideal shape. As a result, the real shape of the first product 130 may be considered as another aspect for adjusting the robot motion path, and thus the robot motion path may be adjusted in a more precious manner.

**In** some embodiments, the dimension difference may also provide a feedback to the previous first processing procedure. Specifically, if the dimension difference satisfies a predetermined condition (for example, if the dimension difference reaches a threshold value), the first processing procedure that is to be performed on a second workpiece may be adjusted based on the difference. Here, the feedback may be used during performing the first processing procedure on other to-be-processed workpieces. With these embodiments, the first processing procedure may be gradually adjusted to match an ideal first processing procedure which may shape the to-be-procedure workpieces into the ideal first products.

Although the above paragraphs describes how to adjusting the robot motion path based on process data 210 collected in a single step in the first processing procedure 120, in some embodiments, the first processing procedure 120 may comprise a plurality of steps. At this point, the plurality of steps may be performed on the first workpiece to obtain the first product 130, and the first process data 210 may describe attributes of the plurality of steps. With these embodiments, with respect to each of the plurality of steps comprised in the first processing procedure 120, individual process data relating to a corresponding attribute of the each step may be obtained. Here, the first process data 210 related to each of the plurality of steps may be used to adjust the robot motion path individually or in combination. Therefore, the first processing procedure 120 may be monitored and controlled in a fined granularity, which may further increase the accuracy for the adjusting.

In some embodiments, measurement dimensions 510 related to each of the plurality steps in the first processing procedure 120 may be obtained. Then, the measurement dimensions 510 may be utilized for generating respective feedbacks for respective steps in the first processing procedure 120.

In some embodiments, once the adaptive robot motion path 460 is determined, the second processing procedure 240 may be performed on the first product 130 based on the adaptive robot motion path 460, and reference will be made to FIG. 6 to describe details. FIG. 6 illustrates a schematic diagram 600 for preforming the second processing procedure 240 based on the adaptive robot motion path 460 in accordance with embodiments of the present disclosure. As illustrated in FIG. 6, the first workpiece 110 may be obtained for producing the final product 250. Here, the first workpiece 110 may be subjected to the first processing procedure 120, where the first processing procedure 120 may include one or more steps such as M1, M2, ..., Mn for shaping the first workpiece 110 into the first product 130. Then, the first product 130 may be subjected to the second processing procedure 240 with the adaptive robot motion path 460, so as to obtain the final product 250.

In some embodiments, the adaptive robot motion path 460 may be generated based on the first process data 210 for the first processing procedure 120. In some embodiments, the adaptive robot motion path 460 may be generated based on the first process data 210 for the first processing procedure 120 as well as the measurement data 510 (illustrated in the dashed block) which indicates the measurement dimensions of the first product 130. With these embodiments, the adaptive robot motion path 460 may provide a motion path which is customized according to the first product 130 and correct the error in the first product 130 during the first processing procedure 120.

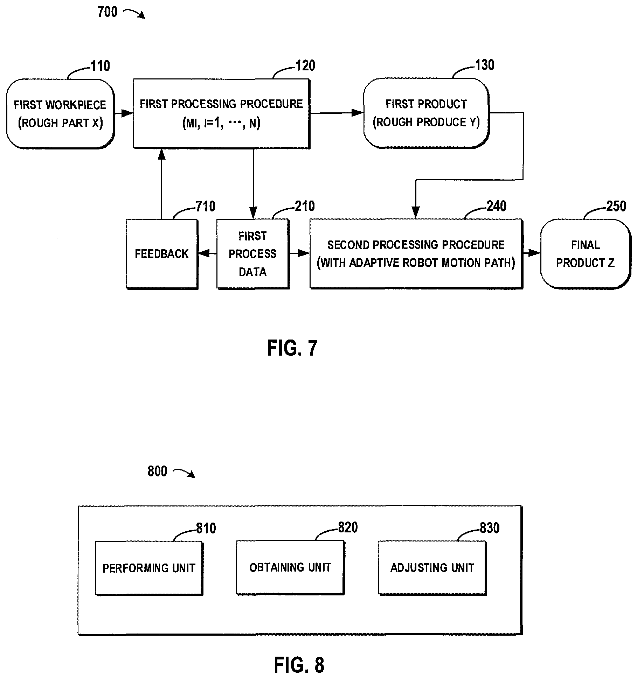

In some embodiments, further than providing adjustment to the robot motion path for the subsequent second processing procedure 240, a feedback may be provided to the first processing procedure 120 to correct the potential operations that may cause the error in the shape of the first product 130. Reference will be made to FIG. 7 for details, which figure illustrates a schematic diagram 700 for providing a feedback to the first processing procedure 120 based on the first process data 210 in accordance with embodiments of the present disclosure.

In these embodiments, a threshold process data (not illustrated in FIG. 7) associated with the first processing procedure 120 may be obtained. Then, the threshold process data may be compared with the first process data 210. If a difference between the first process data 210 and the threshold process data satisfying a predetermined condition, a feedback 710 may be generated to update the first processing procedure 120. When a second workpiece inputted to produce a final product, the second workpiece may be subjected to the updated first processing procedure according to the feedback 710. With these embodiments, the first processing procedure 120 may be gradually adjusted to match the ideal first processing procedure which may shape the to-be-procedure workpieces into the ideal first product.

The embodiments of FIG. 7 may provide bi-direction adjustments. On one hand, the process data 210 may be utilized to generate the adaptive robot motion path 460 for the subsequent second processing procedure 240 run by the robot. On the other hand, the process data 210 may also be used to generate the feedback 710 for adjusting the first processing procedure 120 for the other to-be-processed workpieces. With these embodiments, the whole manufacturing procedure including the first processing procedure 120 and the second processing procedure 240 may be corrected to ensure that the final product 250 is as close to the ideal final product as possible.

In some embodiments of the present disclosure, an apparatus for adjusting a robot motion path is provided. FIG. 8 illustrates a schematic diagram of an apparatus 800 for adjusting a robot motion path in accordance with embodiments of the present disclosure. As illustrated in FIG. 8, the apparatus may comprise: a performing unit 810 configured to perform a first processing procedure on a first workpiece to obtain a first product; an obtaining unit 820 configured to obtain first process data that describes an attribute of the first processing procedure for obtaining the first product from the first workpiece; and an adjusting unit 830 configured to adjust, based on the obtained first process data, a robot motion path of a second processing procedure that is to be performed on the first product by a robot.

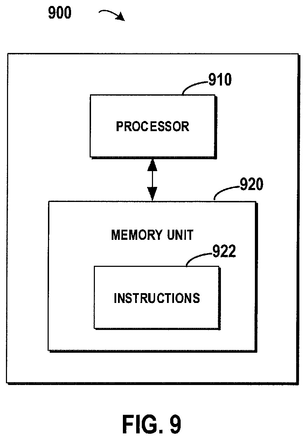

In some embodiments of the present disclosure, a system for adjusting a robot motion path is provided. FIG. 9 illustrates a schematic diagram of a system 900 for adjusting a robot motion path in accordance with embodiments of the present disclosure. As illustrated in FIG. 9, the system 900 may comprise a computer processor 910 coupled to a computer-readable memory unit 920, and the memory unit 920 comprises instructions 922. When executed by the computer processor 910, the instructions 922 may implement the method for adjusting a robot motion path as described in the preceding paragraphs, and details will be omitted hereinafter.

In some embodiments of the present disclosure, a computer readable medium for adjusting a robot motion path is provided. The computer readable medium has instructions stored thereon, and the instructions, when executed on at least one processor, may cause at least one processor to perform the method for adjusting a robot motion path as described in the preceding paragraphs, and details will be omitted hereinafter.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the process or method as described above with reference to Fig. 3. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a standalone software package, partly on the machine and partly on a remote machine or entirely on the remote machine or server.

The above program code may be embodied on a machine readable medium, which may be any tangible medium that may contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment.

## Claims

1. A method for adjusting a robot motion path, comprising:
performing a first processing procedure (120) on a first workpiece (110) to obtain a first product (130), the first procedure including an injection molding process or a mechanical process, for shaping the first workpiece (110) into the first product (130);
obtaining first process data (210) that describes an attribute including pressure or machine speed of the first processing procedure (120) for obtaining the first product (130) from the first workpiece (110); and
adjusting, based on the obtained first process data (210), a robot motion path of a second processing procedure (240) that is to be performed on the first product (130) by a robot, wherein the adjusting comprises:
generating a predicted model (420) for the first product (130) based on the obtained first process data (210); and
when a model difference (440) between the predicted model (420) and an ideal model (430) is classified into various levels, adjusting the robot motion path based on the model difference (440) between the predicted model (420) and an ideal model (430) of the first product (130) according to one of the levels.

2. The method of claim 1, wherein the generating a predicted model (420) for the first product (130) comprises:
obtaining a threshold process data (410) associated with the first processing procedure (120); and
generating the predicted model (420) for the first product (130) based on a difference between the obtained first process data (210) and the threshold process data (410).

3. The method of claim 1, wherein the adjusting the robot motion path based on a model difference (440) comprises:
obtaining a predetermined motion path (450) for the robot; and
adjusting the predetermined motion path (450) based on the model difference (440) such that an error caused by the first process data (210) on the first product (130) in the first processing procedure (120) is compensated in the second processing procedure (240).

4. The method of claim 1, wherein the adjusting the robot motion path further comprises:
obtaining ideal dimensions (520) of a shape of the first product (130);
obtaining measurement dimensions (510) of the shape of the first product (130); and
adjusting the robot motion path based on a dimension difference between the measurement dimensions (510) and the ideal dimensions (520);
the method preferably further comprising:
in response to the dimension difference satisfying a predetermined condition, adjusting a first processing procedure (120) that is to be performed on a second workpiece based on the difference.

5. The method of claim 1, wherein the first processing procedure (120) comprises a plurality of steps; and
wherein the performing a first processing procedure (120) comprises performing the plurality of steps on the first workpiece (110) to obtain the first product (130), and the first process data (210) describing attributes of the plurality of steps.

6. The method of claim 1, further comprising:
performing the second processing procedure (240) on the first product (130) based on the adjusted robot motion path;
and/or
obtaining a threshold process data (410) associated with the first processing procedure (120) and, in response to a difference between the first process data (210) and the threshold process data (410), satisfying a predetermined condition, adjusting a first processing procedure (120) that is to be performed on a second workpiece based on the difference.

7. An apparatus (800) for adjusting a robot motion path, comprising:
a performing unit (810) configured to perform a first processing procedure (120) on a first workpiece (110) to obtain a first product (130), the first procedure including an injection molding process or a mechanical process, for shaping the first workpiece into the first product;
an obtaining unit configured to obtain first process data (210) that describes an attribute including pressure or machine speed of the first processing procedure (120) for obtaining the first product (130) from the first workpiece (110); and
an adjusting unit configured to adjust, based on the obtained first process data (210), a robot motion path of a second processing procedure (240) that is to be performed on the first product (130) by a robot, wherein the adjusting unit comprises:
a generating unit configured to generate a predicted model (420) for the first product (130) based on the obtained first process data (210); and
a path adjusting unit configured to classify into various levels a model difference between the predicted model and an ideal model and adjust the robot motion path based on the model difference (440) between the predicted model (420) and an ideal model (430) of the first product (130) according to one of the levels.

8. The apparatus (800) of claim 7, wherein the generating unit comprises:
a threshold obtaining unit configured to obtain a threshold process data (410) associated with the first processing procedure (120); and
a model generating unit configured to generate the predicted model (420) for the first product (130) based on a difference between the obtained first process data (210) and the threshold process data (410);
and/or the adjusting unit comprises:
a path obtaining unit configured to obtain a predetermined motion path (450) for the robot; and
a path adjusting unit configured to adjust the predetermined motion path (450) based on the model difference (440) such that an error caused by the first process data (210) on the first product (130) in the first processing procedure (120) is compensated in the second processing procedure (240).

9. The apparatus (800) of claim 7, wherein the path adjusting unit comprises:
an ideal dimension obtaining unit configured to obtain ideal dimensions (520) of a shape of the first product (130);
a measurement obtaining unit configured to obtain measurement dimensions (510) of the shape of the first product (130); and
the adjusting unit is further configured to adjust the robot motion path based on a dimension difference between the measurement dimensions (510) and the ideal dimensions (520),
wherein preferably the apparatus (800) further comprises:
a feedback unit configured to adjust a first processing procedure (120) that is to be performed on a second workpiece based on the difference in response to the dimension difference satisfying a predetermined condition.

10. The apparatus (800) of claim 7, wherein the first processing procedure (120) comprises a plurality of steps; and
wherein the performing unit (810) is further configured to perform the plurality of steps on the first workpiece (110) to obtain the first product (130), and the first process data (210) describing attributes of the plurality of steps.

11. The apparatus (800) of claim 7, further comprising:
a second performing unit configured to perform the second processing procedure (240) on the first product (130) based on the adjusted robot motion path.

12. The apparatus (800) of claim 7, further comprising:
a threshold obtaining unit configured to obtain a threshold process data (410) associated with the first processing procedure (120); and
a feedback unit configured to, adjust a first processing procedure (120) that is to be performed on a second workpiece based on the difference in response to a difference between the first process data (210) and the threshold process data (410) satisfying a predetermined condition.

13. A computer readable medium having instructions (922) stored thereon, the instructions (922), when executed on the apparatus (800) of any of claims 7 to 12, cause the apparatus(800) to perform the method according to any of claims 1 to 6.

## Patentansprüche

1. Verfahren zum Anpassen eines Roboterbewegungspfads, umfassend:
Durchführen eines ersten Verarbeitungsvorgangs (120) an einem ersten Werkstück (110), um ein erstes Produkt (130) zu erhalten, wobei der erste Vorgang einen Spritzgussprozess oder einen mechanischen Prozess zum Formen des ersten Werkstücks (110) zu dem ersten Produkt (130) aufweist;
Erhalten von ersten Prozessdaten (210), die ein Attribut beschreiben, das einen Druck oder eine Maschinendrehzahl des ersten Verarbeitungsvorgangs (120) zum Erhalten des ersten Produkts (130) aus dem ersten Werkstück (110) aufweist; und
Anpassen, basierend auf den erhaltenen ersten Prozessdaten (210), eines Roboterbewegungspfads eines zweiten Verarbeitungsvorgangs (240), der an dem ersten Produkt (130) durch einen Roboter durchzuführen ist, wobei das Anpassen Folgendes umfasst:
Erzeugen eines vorhergesagten Modells (420) für das erste Produkt (130) basierend auf den erhaltenen ersten Prozessdaten (210); und
wenn eine Modelldifferenz (440) zwischen dem vorhergesagten Modell (420) und einem idealen Modell (430) in verschiedene Stufen klassifiziert wird, Anpassen des Roboterbewegungspfads basierend auf der Modelldifferenz (440) zwischen dem vorhergesagten Modell (420) und einem idealen Modell (430) des ersten Produkts (130) gemäß einer der Stufen.

2. Verfahren nach Anspruch 1, wobei das Erzeugen eines vorhergesagten Modells (420) für das erste Produkt (130) Folgendes umfasst:
Erhalten von Schwellenprozessdaten (410), die mit dem ersten Verarbeitungsvorgang (120) assoziiert sind; und
Erzeugen des vorhergesagten Modells (420) für das erste Produkt (130) basierend auf einer Differenz zwischen den erhaltenen ersten Prozessdaten (210) und den Schwellenprozessdaten (410).

3. Verfahren nach Anspruch 1, wobei das Anpassen des Roboterbewegungspfads basierend auf einer Modelldifferenz (440) Folgendes umfasst:
Erhalten eines vorbestimmten Bewegungspfads (450) für den Roboter; und
Anpassen des vorbestimmten Bewegungspfads (450) basierend auf der Modelldifferenz (440), so dass ein Fehler, der durch die ersten Prozessdaten (210) an dem ersten Produkt (130) in dem ersten Verarbeitungsvorgang (120) verursacht wird, in dem zweiten Verarbeitungsvorgang (240) kompensiert wird.

4. Verfahren nach Anspruch 1, wobei das Anpassen des Roboterbewegungspfads ferner Folgendes umfasst:
Erhalten von idealen Abmessungen (520) einer Form des ersten Produkts (130);
Erhalten von Messabmessungen (510) der Form des ersten Produkts (130); und
Anpassen des Roboterbewegungspfads basierend auf einer Abmessungsdifferenz zwischen den Messabmessungen (510) und den idealen Abmessungen (520);
wobei das Verfahren vorzugsweise ferner Folgendes umfasst:
als Reaktion darauf, dass die Abmessungsdifferenz eine vorbestimmte Bedingung erfüllt, Anpassen eines ersten Verarbeitungsvorgangs (120), der an einem zweiten Werkstück durchzuführen ist, basierend auf der Differenz.

5. Verfahren nach Anspruch 1, wobei der erste Verarbeitungsvorgang (120) mehrere Schritte umfasst; und wobei das Durchführen eines ersten Verarbeitungsvorgangs (120) Durchführen der mehreren Schritte an dem ersten Werkstück (110), um das erste Produkt (130) zu erhalten, umfasst, und die ersten Prozessdaten (210) Attribute der mehreren Schritte beschreiben.

6. Verfahren nach Anspruch 1, ferner umfassend:
Durchführen des zweiten Verarbeitungsvorgangs (240) an dem ersten Produkt (130) basierend auf dem angepassten Roboterbewegungspfad;
und/oder
Erhalten von Schwellenprozessdaten (410), die mit dem ersten Verarbeitungsvorgang (120) assoziiert sind, und, als Reaktion darauf, dass eine Differenz zwischen den ersten Prozessdaten (210) und den Schwellenprozessdaten (410), eine vorbestimmte Bedingung erfüllt, Anpassen eines ersten Verarbeitungsvorgangs (120), der an einem zweiten Werkstück durchzuführen ist, basierend auf der Differenz.

7. Einrichtung (800) zum Anpassen eines Roboterbewegungspfads, umfassend:
eine Durchführungseinheit (810), die dazu ausgelegt ist, einen ersten Verarbeitungsvorgang (120) an einem ersten Werkstück (110) durchzuführen, um ein erstes Produkt (130) zu erhalten, wobei der erste Vorgang einen Spritzgussprozess oder einen mechanischen Prozess zum Formen des ersten Werkstücks zu dem ersten Produkt aufweist;
eine Erhaltungseinheit, die dazu ausgelegt ist, erste Prozessdaten (210) zu erhalten, die ein Attribut beschreiben, das einen Druck oder eine Maschinendrehzahl des ersten Verarbeitungsvorgangs (120) zum Erhalten des ersten Produkts (130) aus dem ersten Werkstück (110) aufweist; und
eine Anpassungseinheit, die dazu ausgelegt ist, basierend auf den erhaltenen ersten Prozessdaten (210) einen Roboterbewegungspfad eines zweiten Verarbeitungsvorgangs (240), der an dem ersten Produkt (130) durch einen Roboter durchzuführen ist, anzupassen, wobei die Anpassungseinheit Folgendes umfasst:
eine Erzeugungseinheit, die dazu ausgelegt ist, ein vorhergesagtes Modell (420) für das erste Produkt (130) basierend auf den erhaltenen ersten Prozessdaten (210) zu erzeugen; und
eine Pfadanpassungseinheit, die dazu ausgelegt ist, eine Modelldifferenz zwischen dem vorhergesagten Modell und einem idealen Modell in verschiedene Stufen zu klassifizieren und den Roboterbewegungspfad basierend auf der Modelldifferenz (440) zwischen dem vorhergesagten Modell (420) und einem idealen Modell (430) des ersten Produkts (130) gemäß einer der Stufen anzupassen.

8. Einrichtung (800) nach Anspruch 7, wobei die Erzeugungseinheit Folgendes umfasst:
eine Schwellenerhaltungseinheit, die dazu ausgelegt ist, Schwellenprozessdaten (410) zu erhalten, die mit dem ersten Verarbeitungsvorgang (120) assoziiert sind; und
eine Modellerzeugungseinheit, die dazu ausgelegt ist, das vorhergesagte Modell (420) für das erste Produkt (130) basierend auf einer Differenz zwischen den erhaltenen ersten Prozessdaten (210) und den Schwellenprozessdaten (410) zu erzeugen;
und/oder wobei die Anpassungseinheit Folgendes umfasst:
eine Pfaderhaltungseinheit, die dazu ausgelegt ist, einen vorbestimmten Bewegungspfad (450) für den Roboter zu erhalten; und
eine Pfadanpassungseinheit, die dazu ausgelegt ist, den vorbestimmten Bewegungspfad (450) basierend auf der Modelldifferenz (440) anzupassen, so dass ein Fehler, der durch die ersten Prozessdaten (210) an dem ersten Produkt (130) in dem ersten Verarbeitungsvorgang (120) verursacht wird, in dem zweiten Verarbeitungsvorgang (240) kompensiert wird.

9. Einrichtung (800) nach Anspruch 7, wobei die Pfadanpassungseinheit Folgendes umfasst:
eine Einheit zum Erhalten von idealen Abmessungen, die dazu ausgelegt ist, ideale Abmessungen (520) einer Form des ersten Produkts (130) zu erhalten;
eine Messungserhaltungseinheit, die dazu ausgelegt ist, Messabmessungen (510) der Form des ersten Produkts (130) zu erhalten; und
wobei die Anpassungseinheit ferner dazu ausgelegt ist, den Roboterbewegungspfad basierend auf einer Abmessungsdifferenz zwischen den Messabmessungen (510) und den idealen Abmessungen (520) anzupassen,
wobei vorzugsweise die Einrichtung (800) ferner Folgendes umfasst:
eine Rückkopplungseinheit, die dazu ausgelegt ist, einen ersten Verarbeitungsvorgang (120), der an einem zweiten Werkstück durchzuführen ist, basierend auf der Differenz als Reaktion darauf anzupassen, dass die Abmessungsdifferenz eine vorbestimmte Bedingung erfüllt.

10. Einrichtung (800) nach Anspruch 7, wobei der erste Verarbeitungsvorgang (120) mehrere Schritte umfasst; und wobei die Durchführungseinheit (810) ferner dazu ausgelegt ist, die mehreren Schritte an dem ersten Werkstück (110) durchzuführen, um das erste Produkt (130) zu erhalten, und die ersten Prozessdaten (210) Attribute der mehreren Schritte beschreiben.

11. Einrichtung (800) nach Anspruch 7, ferner umfassend: eine zweite Durchführungseinheit, die dazu ausgelegt ist, den zweiten Verarbeitungsvorgang (240) an dem ersten Produkt (130) basierend auf dem angepassten Roboterbewegungspfad durchzuführen.

12. Einrichtung (800) nach Anspruch 7, ferner umfassend: eine Schwellenerhaltungseinheit, die dazu ausgelegt ist, Schwellenprozessdaten (410) zu erhalten, die mit dem ersten Verarbeitungsvorgang (120) assoziiert sind; und
eine Rückkopplungseinheit, die dazu ausgelegt ist, einen ersten Verarbeitungsvorgang (120), der an einem zweiten Werkstück durchzuführen ist, basierend auf der Differenz als Reaktion darauf anzupassen, dass eine Differenz zwischen den ersten Prozessdaten (210) und den Schwellenprozessdaten (410) eine vorbestimmte Bedingung erfüllt.

13. Computerlesbares Medium mit darauf gespeicherten Anweisungen (922), wobei die Anweisungen (922), wenn sie auf der Einrichtung (800) nach einem der Ansprüche 7 bis 12 ausgeführt werden, die Einrichtung(800) veranlassen, das Verfahren nach einem der Ansprüche 1 bis 6 auszuführen

## Revendications

1. Procédé pour régler un trajet de mouvement de robot, comprenant :
la réalisation d'une première procédure de traitement (120) sur une première pièce à usiner (110) pour obtenir un premier produit (130), la première procédure incluant un processus de moulage par injection ou un processus mécanique, pour mettre en forme la première pièce à usiner (110) en le premier produit (130) ;
l'obtention de premières données de processus (210) qui décrivent un attribut y compris une pression ou vitesse de machine de la première procédure de traitement (120) pour obtenir le premier produit (130) à partir de la première pièce à usiner (110) ; et
le réglage, sur la base des premières données de processus obtenues (210), d'un trajet de mouvement de robot d'une seconde procédure de traitement (240) qui doit être réalisée sur le premier produit (130) par un robot, dans lequel le réglage comprend :
la génération d'un modèle prédit (420) pour le premier produit (130) sur la base des premières données de processus obtenues (210) ; et
lorsqu'une différence de modèle (440) entre le modèle prédit (420) et un modèle idéal (430) est classifiée en divers niveaux, le réglage du trajet de mouvement de robot sur la base de la différence de modèle (440) entre le modèle prédit (420) et un modèle idéal (430) du premier produit (130) selon un des niveaux.

2. Procédé de la revendication 1, dans lequel la génération d'un modèle prédit (420) pour le premier produit (130) comprend :
l'obtention de données de processus seuil (410) associées à la première procédure de traitement (120) ; et
la génération du modèle prédit (420) pour le premier produit (130) sur la base d'une différence entre les premières données de processus obtenues (210) et les données de processus seuil (410).

3. Procédé de la revendication 1, dans lequel le réglage le trajet de mouvement de robot sur la base d'une différence de modèle (440) comprend :
l'obtention d'un trajet de mouvement prédéterminé (450) pour le robot ; et
le réglage du trajet de mouvement prédéterminé (450) sur la base de la différence de modèle (440) de manière telle qu'une erreur causée par les premières données de processus (210) sur le premier produit (130) dans la première procédure de traitement (120) est compensée dans la seconde procédure de traitement (240).

4. Procédé de la revendication 1, dans lequel le réglage du trajet de mouvement de robot comprend en outre :
l'obtention de dimensions idéales (520) d'une forme du premier produit (130) ;
l'obtention de dimensions de mesure (510) de la forme du premier produit (130) ; et
le réglage du trajet de mouvement de robot sur la base d'une différence de dimensions entre les dimensions de mesure (510) et les dimensions idéales (520) ;
le procédé comprenant de préférence en outre :
en réponse au fait que la différence de dimensions satisfait à une condition prédéterminée, le réglage d'une première procédure de traitement (120) qui doit être réalisée sur une seconde pièce à usiner sur la base de la différence.

5. Procédé de la revendication 1, dans lequel la première procédure de traitement (120) comprend une pluralité d'étapes ; et
dans lequel la réalisation d'une première procédure de traitement (120) comprend la réalisation de la pluralité d'étapes sur la première pièce à usiner (110) pour obtenir le premier produit (130), les premières données de processus (210) décrivant des attributs de la pluralité d'étapes.

6. Procédé de la revendication 1, comprenant en outre :
la réalisation de la seconde procédure de traitement (240) sur le premier produit (130) sur la base du trajet de mouvement de robot réglé ;
et/ou
l'obtention de données de processus seuil (410) associées à la première procédure de traitement (120) et, en réponse au fait qu'une différence entre les premières données de processus (210) et les données de processus seuil (410) satisfait à une condition prédéterminée, le réglage d'une première procédure de traitement (120) qui doit être réalisée sur une seconde pièce à usiner sur la base de la différence.

7. Appareil (800) pour régler un trajet de mouvement de robot, comprenant :
une unité de réalisation (810) configurée pour réaliser une première procédure de traitement (120) sur une première pièce à usiner (110) pour obtenir un premier produit (130), la première procédure incluant un processus de moulage par injection ou un processus mécanique, pour mettre en forme la première pièce à usiner en le premier produit ;
une unité d'obtention configurée pour obtenir des premières données de processus (210) qui décrivent un attribut y compris une pression ou vitesse de machine de la première procédure de traitement (120) pour obtenir le premier produit (130) à partir de la première pièce à usiner (110) ; et
une unité de réglage configurée pour régler, sur la base des premières données de processus obtenues (210), un trajet de mouvement de robot d'une seconde procédure de traitement (240) qui doit être réalisée sur le premier produit (130) par un robot, dans lequel l'unité de réglage comprend :
une unité de génération configurée pour générer un modèle prédit (420) pour le premier produit (130) sur la base des premières données de processus obtenues (210) ; et
une unité de réglage de trajet configurée pour classifier en divers niveaux une différence de modèle entre le modèle prédit et un modèle idéal et régler le trajet de mouvement de robot sur la base de la différence de modèle (440) entre le modèle prédit (420) et un modèle idéal (430) du premier produit (130) selon un des niveaux.

8. Appareil (800) de la revendication 7, dans lequel l'unité de génération comprend :
une unité d'obtention de seuil configurée pour obtenir des données de processus seuil (410) associées à la première procédure de traitement (120) ; et
une unité de génération de modèle configurée pour générer le modèle prédit (420) pour le premier produit (130) sur la base d'une différence entre les premières données de processus obtenues (210) et les données de processus seuil (410) ;
et/ou l'unité de réglage comprend :
une unité d'obtention de trajet configurée pour obtenir un trajet de mouvement prédéterminé (450) pour le robot ; et
une unité de réglage de trajet configurée pour régler le trajet de mouvement prédéterminé (450) sur la base de la différence de modèle (440) de manière telle qu'une erreur causée par les premières données de processus (210) sur le premier produit (130) dans la première procédure de traitement (120) est compensée dans la seconde procédure de traitement (240).

9. Appareil (800) de la revendication 7, dans lequel l'unité de réglage de trajet comprend :
une unité d'obtention de dimensions idéales configurée pour obtenir des dimensions idéales (520) d'une forme du premier produit (130) ;
une unité d'obtention de mesure configurée pour obtenir des dimensions de mesure (510) de la forme du premier produit (130) ; et
l'unité de réglage est en outre configuré pour régler le trajet de mouvement de robot sur la base d'une différence de dimensions entre les dimensions de mesure (510) et les dimensions idéales (520),
dans lequel, de préférence, l'appareil (800) comprend en outre :
une unité de rétroaction configurée pour régler une première procédure de traitement (120) qui doit être réalisée sur une seconde pièce à usiner sur la base de la différence en réponse au fait que la différence de dimensions satisfait à une condition prédéterminée.

10. Appareil (800) de la revendication 7, dans lequel la première procédure de traitement (120) comprend une pluralité d'étapes ; et
dans lequel l'unité de réalisation (810) est en outre configurée pour réaliser la pluralité d'étapes sur la première pièce à usiner (110) pour obtenir le premier produit (130), et les premières données de processus (210) décrivant des attributs de la pluralité d'étapes.

11. Appareil (800) de la revendication 7, comprenant en outre :
une seconde unité de réalisation configurée pour réaliser la seconde procédure de traitement (240) sur le premier produit (130) sur la base du trajet de mouvement de robot réglé.

12. Appareil (800) de la revendication 7, comprenant en outre :
une unité d'obtention de seuil configurée pour obtenir des données de processus seuil (410) associées à la première procédure de traitement (120) ; et
une unité de rétroaction configurée pour régler une première procédure de traitement (120) qui doit être réalisée sur une seconde pièce à usiner sur la base de la différence en réponse au fait qu'une différence entre les premières données de processus (210) et les données de processus seuil (410) satisfait à une condition prédéterminée.

13. Support lisible par ordinateur sur lequel sont stockées des instructions (922), les instructions (922), lorsqu'elles sont exécutées sur l'appareil (800) selon l'une quelconque des revendications 7 à 12, amenant l'appareil (800) à mettre en œuvre le procédé selon l'une quelconque des revendications 1 à 6.
